# EUROPÄISCHE PATENTSCHRIFT

(11) **EP 2 145 564 B1**
(45) Veröffentlichungstag und Bekanntmachung des Hinweises auf die Patenterteilung: **04.07.2012**
(21) Anmeldenummer: 08017221.6
(22) Anmeldetag: 30.09.2008
(51) Int. Cl.: F16M 11/10, A47B 97/06, G03B 21/54, F16M 11/04

(54) **Tragarm für eine Projektionsvorrichtung**
Carrying arm for a projection device
Bras de support pour un dispositif de projection

(30) Priorität: 14.07.2008 DE 102008033060
(43) Veröffentlichungstag der Anmeldung: 20.01.2010
(73) Patentinhaber: VS Vereinigte Spezialmöbelfabriken GmbH & Co. KG, 97941 Tauberbischofsheim (DE)
(72) Erfinder: Weber, Reinhard, 32425 Minden (DE); Korte, Friedrich, 32429 Minden (DE)
(74) Vertreter: Söltenfuss, Dirk Christian

(56) Entgegenhaltungen:
- WO-A1-2004/062278
- US-A- 5 108 063
- US-A- 6 019 332
- US-A1- 2005 205 734

## Beschreibung

Die vorliegende Erfindung betrifft einen Tragarm für eine Projektionsvorrichtung, wie beispielsweise einen Beamer.

Im Stand der Technik sind verschiedene Präsentationssysteme bekannt, die eine Projektionstafel und einen auf diese gerichteten Beamer umfassen. In vielen Fällen ist der Beamer dabei zwischen einer Betriebsstellung und einer Nichtbetriebsstellung verstellbar.

So offenbart zum Beispiel die DE 20 2007 010 920 U1 ein Präsentationssystem, bei welchem der Beamer über einen Tragarm an der Projektionstafel derart befestigt ist, dass er um eine vertikale Achse zur Seite geschwenkt werden kann.

Die WO 2004/062278 A1 zeigt ein integriertes Projektionssystem mit einer Projektionstafel und einem an dieser mittels eines Tragarms befestigten Projektor. Der Tragarm für den Projektor ist um eine horizontale Achse nach unten schwenkbar, sodass der Projektor bei Nichtbetrieb in eine geschützte Stellung vor der Projektionstafel abgeklappt werden kann.

Ferner beschreibt die DE 20 2008 002 222 U1 (kein Stand der Technik nach Art. 54 EPÜ) eine mobile Präsentationsvorrichtung, die eine Projektionstafel und einen auf diese gerichteten Projektor aufweist, die beide an einer höhenverstellbaren Tragkonstruktion befestigt sind. Der Tragarm für den Projektor enthält ein Gelenk, sodass der Projektor in eine geschützte Nichtbetriebsstellung vor die Projektionstafel nach unten abgeklappt werden kann.

Sowohl bei ortsfest, d.h. zum Beispiel an einer Gebäudewand angebrachten Präsentationssystemen als auch bei mobilen, d.h. zum Beispiel mit einem verfahrbaren Untergestell versehenen Präsentationssysteme ist es von Vorteil, wenn die Präsentationssysteme in ihrer Höhe verstellbar sind, um die Systeme jeweils optimal auf die aktuellen Gegebenheiten abstimmen zu können, und wenn die jeweilige Projektionsvorrichtung in eine geschützte Nichtbetriebsstellung bewegt werden kann.

Der vor die Projektionstafel ragende Tragarm für die Projektionsvorrichtung hat im Allgemeinen eine Instabilität des Systems zur Folge. Entweder besteht die Gefahr des Umkippens des gesamten Präsentationssystems bei einer zusätzlichen Gewichtsbelastung des Tragarms (z.B. durch einen sich daran hängenden Schüler), wenn der Tragarm in der Betriebsstellung der Projektionsvorrichtung festgestellt ist oder nur seitlich schwenkbar ausgebildet ist, oder es besteht die Gefahr einer Beschädigung der elektronischen Präsentationselemente (Projektor, Projektionstafel), wenn ein nach unten abklappbarer Tragarm bei einer zusätzlichen Gewichtsbelastung unkontrolliert nach unten schwingt.

Die US 5,108,063 A offenbart einen Tragarm für einen Computer, der an einer Wand befestigt und zur Bedienung ausgezogen werden kann. Zwei Arme sind schwenkbar an einer Wandhalterung befestigt und über ein Gelenk und eine Feder mit einem Halter für den Computer verbunden. Der Halter für den Computer wird über die beiden Arme zwischen einer Nichtgebrauchsstellung und einer Gebrauchsstellung verschwenkt, wobei er in Bezug auf die Wandhalterung seine Ausrichtung beibehält.

Die US 6,019,332 A offenbart einen Tragarm für einen Bildschirm, der an einer Wand befestigbar ist und ein Verschwenken des Bildschirms um eine horizontale Achse und um zwei vertikale Achsen erlaubt. Hierzu weist der Tragarm einen ersten Armabschnitt auf, der um eine vertikale Achse drehbar an einer Wandhalterung befestigt ist, einen zweiten Armabschnitt, der um eine horizontale Achse drehbar mit dem ersten Armabschnitt verbunden ist, und ein Drehgelenk zur Befestigung des Bildschirms am zweiten Armabschnitt.

Es ist eine Aufgabe der vorliegenden Erfindung, einen Tragarm für eine Projektionsvorrichtung zu schaffen, der die oben genannten Probleme herkömmlicher Systeme vermeidet. Der erfindungsgemäße Tragarm soll insbesondere ein Abklappen der daran befestigten Projektionsvorrichtung ermöglichen, aber zugleich eine erhöhte Sicherheit für den Benutzer und die Projektionsvorrichtung gewährleisten.

Diese Aufgabe wird durch einen Tragarm für eine Projektionsvorrichtung mit den Merkmalen des Anspruchs 1 gelöst. Vorteilhafte Ausgestaltungen und Weiterbildungen der Erfindung sind Gegenstand der abhängigen Ansprüche.

Durch die Ausbildung des Tragarms aus den zwei Armabschnitten, die über eine Gelenkvorrichtung miteinander verbunden sind, und die Ausbildung dieser Gelenkvorrichtung derart, dass der zweite Armabschnitt relativ zum ersten Armabschnitt zwischen einer ersten Betriebsstellung, in welcher die Längsachsen der beiden Armabschnitte im Wesentlichen parallel zueinander verlaufen, und einer zweiten Nichtbetriebsstellung, in welcher die Längsachsen der beiden Armabschnitte im Wesentlichen rechtwinklig zueinander verlaufen, drehbar ist, kann eine am zweiten Armabschnitt befestigte Projektionsvorrichtung einerseits in einer vorbestimmten Betriebsstellung relativ zur Projektionstafel gehalten und andererseits in einer vor die Projektionstafel abgeklappten Nichtbetriebsstellung in platzsparender Weise geschützt werden.

Durch die spezielle Federvorrichtung, die einerseits mit dem ersten Armabschnitt und andererseits mit dem zweiten Armabschnitt so gekoppelt und deren Federkraft so gewählt ist, dass sie eine Gewichtskraft des zweiten Armabschnitts und der daran befestigten Projektionsvorrichtung über im Wesentlichen den gesamten Drehweg des zweiten Armabschnitts relativ zum ersten Armabschnitt ausgleicht, ist zudem gewährleistet, dass der zweite Armabschnitt und damit die Projektionsfläche in jeder beliebigen Stellung relativ zum ersten Armabschnitt bzw. zur Projektionstafel ohne zusätzliche Maßnahmen gehalten wird, ohne eine echte Feststellung bzw. Fixierung vorzunehmen. Die durch die Gelenkvorrichtung definierten Endstellungen der Drehbewegung des zweiten Armabschnitts geben die definierte Betriebsstellung und Nichtbetriebsstellung vor. Da der zweite Armabschnitt in seiner ersten Stellung nicht fixiert wird, kann er bei einer zusätzlichen Gewichtsbelastung (beabsichtigt oder ungewollt) sofort und problemlos in seine zweite Stellung drehen. Der zweite Armabschnitt gibt also der zusätzlichen Gewichtskraft nach und vermeidet damit, dass der gesamte Tragarm bzw. die gesamte Präsentationsvorrichtung, an welcher der Tragarm vorgesehen ist, dieser Gewichtskraft nachgibt und zum Beispiel umkippt und damit den Benutzer und/oder die angebrachten Präsentationselemente gefährdet. Die Federvorrichtung bewirkt außerdem eine gedämpfte Schwenkbewegung des zweiten Armabschnitts bzw. der Projektionsvorrichtung, wodurch die vorgesehenen elektronischen Präsentationselemente zusätzlich vor Beschädigung geschützt werden.

In einer bevorzugten Ausführungsform der Erfindung ist die Federvorrichtung mit dem ersten und dem zweiten Armabschnitt des Tragarms so gekoppelt und ist deren Federkraft so gewählt, dass der zweite Armabschnitt in seiner ersten Stellung und/oder seiner zweiten Stellung ohne zusätzliche Maßnahmen gehalten wird. Dies kann zum Beispiel dadurch erreicht werden, dass die Federkraft der Federvorrichtung größer als die Gewichtskraft des zweiten Armabschnitts und der daran befestigten Projektionsvorrichtung gewählt ist und die Federvorrichtung diese Federkraft in der jeweiligen Endstellung in Richtung entgegengesetzt zur jeweils anderen Stellung ausübt. Vorzugsweise wird der zweite Armabschnitt so in beiden Endstellungen (Betriebsstellung und Nichtbetriebsstellung) gehalten.

In einer bevorzugten Ausgestaltung der Erfindung enthält die Federvorrichtung des Tragarms wenigstens eine Gasfeder.

Zum Beispiel ist ein Ende der Gasfeder am ersten Armabschnitt des Tragarms oder einem starr mit diesem verbundenen Element drehbar befestigt und ein anderes Ende der Gasfeder am zweiten Armabschnitt des Tragarms oder einem starr mit diesem verbundenen Element drehbar befestigt.

In einer weiteren Ausgestaltung der Erfindung weist die Gelenkvorrichtung eine Führungseinrichtung auf, die die Drehbewegung des zweiten Armabschnitts relativ zum ersten Armabschnitt führt und bezüglich der ersten und/oder der zweiten Stellung des zweiten Armabschnitts relativ zum ersten Armabschnitt begrenzt. Diese Begrenzung der Drehbewegung des zweiten Armabschnitts durch die Führungseinrichtung der Gelenkvorrichtung legt die erste Stellung (Betriebsstellung) bzw. die zweite Stellung (Nichtbetriebsstellung) des zweiten Armabschnitts fest.

Zum Beispiel weist die Führungseinrichtung eine Führungsnut und einen in der Führungsnut geführten Nocken auf. Ein Ende der Führungsnut bestimmt die erste bzw. zweite Stellung des zweiten Armabschnitts relativ zum ersten Armabschnitt. Alternativ oder zusätzlich bestimmt eine Relativposition des Nockens zur Führungsnut die erste bzw. zweite Stellung des zweiten Armabschnitts relativ zum ersten Armabschnitt. Im zweitgenannten Fall ist diese Relativposition des Nockens zur Führungsnut vorzugsweise einstellbar, sodass zum Beispiel die Betriebsstellung des zweiten Armabschnitts fein justiert bzw. nachjustiert werden kann.

In einer Ausführungsform ist die Führungsnut am ersten Armabschnitt des Tragarms oder einem starr mit diesem verbundenen Element vorgesehen und der Führungsnocken am zweiten Armabschnitt des Tragarms oder einem starr mit diesem verbundenen Element vorgesehen. In einer alternativen Ausführungsform ist die Führungsnut am zweiten Armabschnitt des Tragarms oder einem starr mit diesem verbundenen Element vorgesehen und der Führungsnocken am ersten Armabschnitt des Tragarms oder einem starr mit diesem verbundenen Element vorgesehen.

In einer noch weiteren Ausgestaltung der Erfindung ist der zweite Armabschnitt des Tragarms in seiner zweiten, d.h. abgeklappten Stellung verriegelbar. Durch diese Maßnahme kann verhindert werden, dass eine Präsentationsvorrichtung, an welcher dieser Tragarm vorgesehen ist, durch Nichtbefugte benutzt wird.

Der oben beschriebene Tragarm der Erfindung wird in vorteilhafter Weise in einer Präsentationsvorrichtung verwendet, die einen Träger, eine Projektionstafel, die an dem Träger befestigt ist, und eine Projektionsvorrichtung, die über einen solchen Tragarm an dem Träger befestigt ist, aufweist. Der erfindungsgemäße Tragarm ist dabei so an dem Träger befestigt, dass der zweite Armabschnitt des Tragarms in seiner ersten Stellung die Projektionsvorrichtung in einer vorbestimmten Betriebsposition relativ zur Projektionstafel positioniert und in seiner zweiten Stellung vor die Projektionstafel abgeklappt ist.

Gemäß der Erfindung verläuft der erste Armabschnitt des Tragarms im Wesentlichen horizontal. Der zweite Armabschnitt des Tragarms verläuft in seiner ersten Stellung ebenfalls im Wesentlichen horizontal, in seiner zweiten Stellung dagegen im Wesentlichen vertikal.

In weiterer Ausgestaltung der Erfindung ist der Träger der Präsentationsvorrichtung höhenverstellbar ausgebildet oder montiert, um die Höhenposition der Präsentationselemente variabel einstellen zu können.

Ferner kann die Präsentationsvorrichtung wahlweise mobil ausgebildet oder fest installiert sein.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: eine schematische Seitenansicht einer Präsentationsvorrichtung mit einer Projektionstafel und einer Projektionsvorrichtung, die an einem Tragarm der vorliegenden Erfindung befestigt ist;
- Fig. 2: eine vergrößerte schematische Seitenansicht eines Tragarms gemäß einem bevorzugten Ausführungsbeispiel der Erfindung, mit dem zweiten Armabschnitt in seiner ersten Stellung (Betriebsstellung);
- Fig. 3: eine vergrößerte schematische Seitenansicht eines Tragarms gemäß einem bevorzugten Ausführungsbeispiel der Erfindung, mit dem zweiten Armabschnitt in seiner zweiten Stellung (abgeklappte Nichtbetriebs- stellung); und
- Fig. 4: eine Teilseitenansicht des Tragarms gemäß einem bevorzugten Aus- führungsbeispiel der Erfindung, bei entferntem Gehäuse der Gelenk- vorrichtung und entfernter Federvorrichtung.

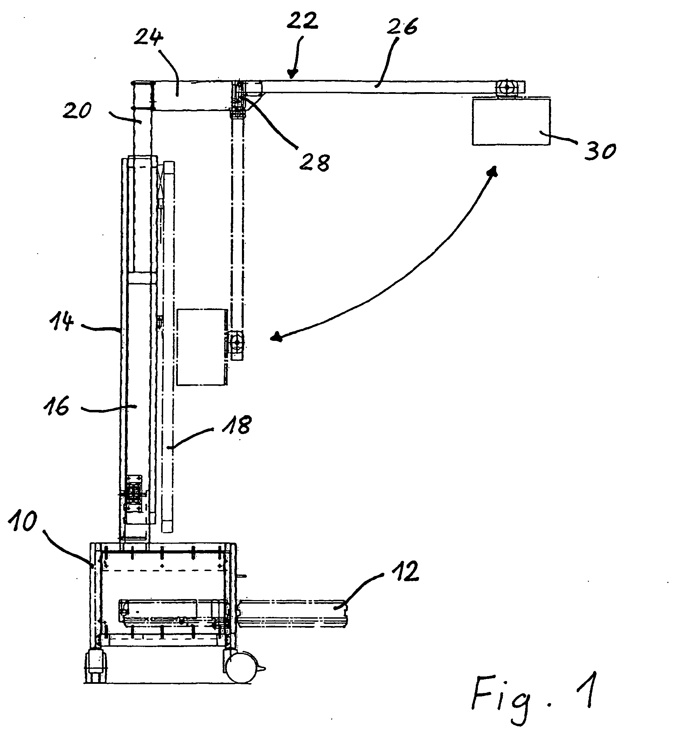

In Fig. 1 ist zunächst der Grundaufbau einer mobilen Präsentationsvorrichtung dargestellt, bei welcher der Tragarm der Erfindung in vorteilhafter Weise zum Einsatz kommen kann.

Die Präsentationsvorrichtung besitzt ein verfahrbares Untergestell 10 mit mehreren Fußrollen, das beispielsweise in der Form eines Möbelstücks wie eines Regalmöbels, Sideboards oder dergleichen ausgebildet ist. Durch das verfahrbare Untergestell 10 kann die Präsentationsvorrichtung flexibel an verschiedenen Orten eingesetzt werden und es muss zum Beispiel nicht für jedes Klassenzimmer oder jeden Besprechungsraum eine eigene Präsentationsvorrichtung dieser Art angeschafft werden.

Das Untergestell 10 weist vorzugsweise mehrere Aufnahmen 12 auf, die beispielsweise in der Form eines Faches oder einer Schublade ausgebildet sind und vorzugsweise verschließbar, bevorzugter zudem abschließbar sind. Die Aufnahmen 12 des Untergestells 10 dienen insbesondere der Aufnahme von Peripheriegeräten der Präsentationselemente dieser Präsentationsvorrichtung. Zu den Peripheriegeräten zählen beispielsweise ein Steuergerät, ein Rechner, ein Drucker und dergleichen. Im Fall von interaktiven Präsentationselementen sind als Peripheriegeräte auch Stifte, Zeigegeräte und dergleichen zum Aktivieren einer Projektionsfläche durch den/die Benutzer zu nennen.

Wie in Fig. 1 angedeutet, kann eine der Aufnahmen 12 zum Beispiel eine Ablage /Auflage für einen Rechner, ein Notebook und dergleichen enthalten, die zum Beispiel mittels Gasfedern höhenverstellbar ausgebildet ist. Auf diese Weise wird dem Benutzer zum Beispiel eine Notebook-Auflage in einer für die Bedienung optimalen Arbeitshöhe zur Verfügung gestellt.

In dem verfahrbaren Untergestell 10 sind ferner auch die elektrischen Anschlüsse für die Präsentationselemente sowie das komplette Kabelmanagement untergebracht. Zu den elektrischen Anschlüssen zählen insbesondere Anschlüsse für die Stromversorgung und die Kommunikation der Präsentationselemente untereinander und mit anderen Geräten und Netz(werken). Auch sind vorzugsweise unterschiedliche und jeweils mehrere solche Anschlüsse vorgesehen.

An bzw. auf diesem Untergestell 10 ist eine Höhenpositioniervorrichtung angeordnet und befestigt. Diese Höhenpositioniervorrichtung umfasst insbesondere eine Halterung oder Tragkonstruktion 14 und einen Träger 16. Die Halterung 14 weist in der hier dargestellten Ausführungsform zwei parallele Pylonen bzw. Säulen auf, an denen der Träger 16 zwischen einer ersten und einer zweiten Höhenposition verschiebbar gelagert ist. Der Träger 16 ist im Wesentlichen plattenförmig oder rahmenförmig ausgebildet.

Die vorliegende Erfindung ist nicht nur auf diese Halterung 14 beschränkt. Die Halterung 14 kann zum Beispiel auch nur einen Pylonen oder mehr als zwei Pylonen aufweisen. Anstelle von Pylonen können auch andere Säulen, Stützen, Tragelemente und dergleichen verwendet werden.

Des Weiteren ist die vorliegende Erfindung auch nicht auf die Anwendung bei einer mobilen Präsentationsvorrichtung beschränkt. Die Präsentationsvorrichtung kann über die Halterung 14 anstatt auf einem verfahrbaren Untergestell 10 auch an einem ortsfesten Element wie einer Wand, einem Möbelstück oder dergleichen montiert werden. Je nach Konstruktion der Halterung 14 ist die Präsentationsvorrichtung zur Montage direkt an einer Wand oder dergleichen oder zum Aufhängen bzw. Einhängen an einer Wandschiene, die ihrerseits an einer Wand, einem Möbelstück oder dergleichen befestigt ist. Im letztgenannten Fall kann die gesamte Präsentationsvorrichtung zusätzlich zu ihrer eigenen Höhenverstellung auch noch horizontal entlang der Wandschiene verschoben werden.

Außerdem ist die vorliegende Erfindung alternativ auch bei Präsentationsvorrichtungen verwendbar, die über keine Höhenpositionierung verfügen, sondern bei denen die Präsentationselemente wie Projektor und Projektionstafel an festen Höhenpositionen angebracht sind.

An dem Träger 16 der Höhenpositioniervorrichtung können ein oder mehrere Präsentationselemente befestigt werden. In dem Ausführungsbeispiel von Fig. 1 sind an dem Träger 14 eine Projektionstafel 18, vorzugsweise eine interaktive Projektionstafel, sowie eine Projektionsvorrichtung 30 wie beispielsweise ein Projektor oder Beamer montiert. Zur Montage des Projektors 30 ist ein vertikaler Träger 20, der in Fortsetzung zur Halterung 14 angebracht ist, und ein Tragarm 22 der Erfindung vorgesehen.

Der Tragarm 22 umfasst im Wesentlichen einen ersten Armabschnitt 24, der an dem vertikalen Träger 20 befestigt ist und im Wesentlichen horizontal verläuft, und einen zweiten Armabschnitt 26, der mit seinem einen Ende über eine Gelenkvorrichtung 28 mit dem ersten Armabschnitt 24 verbunden ist und dessen anderem freien Ende die Projektionsvorrichtung 30 befestigt ist.

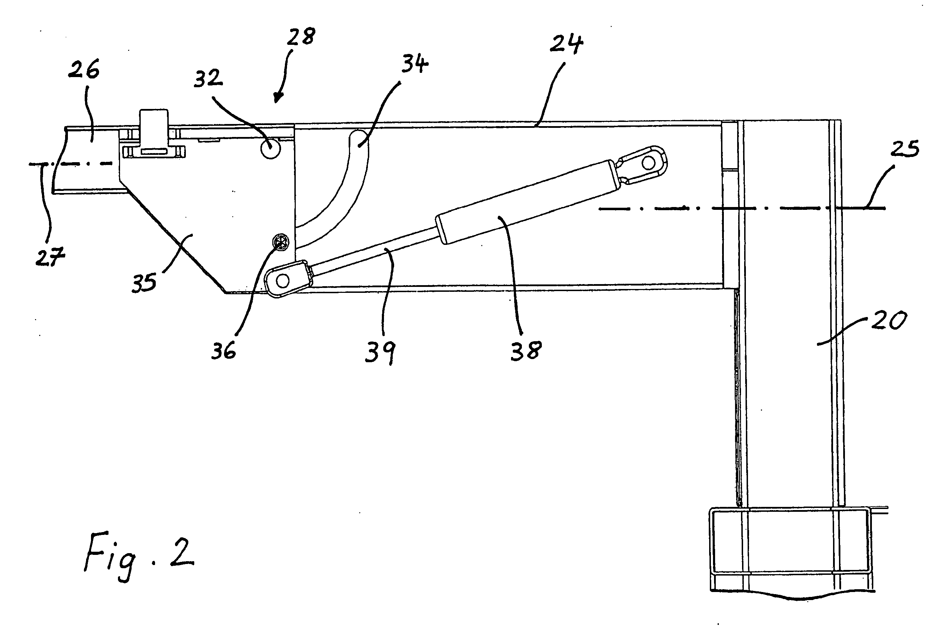

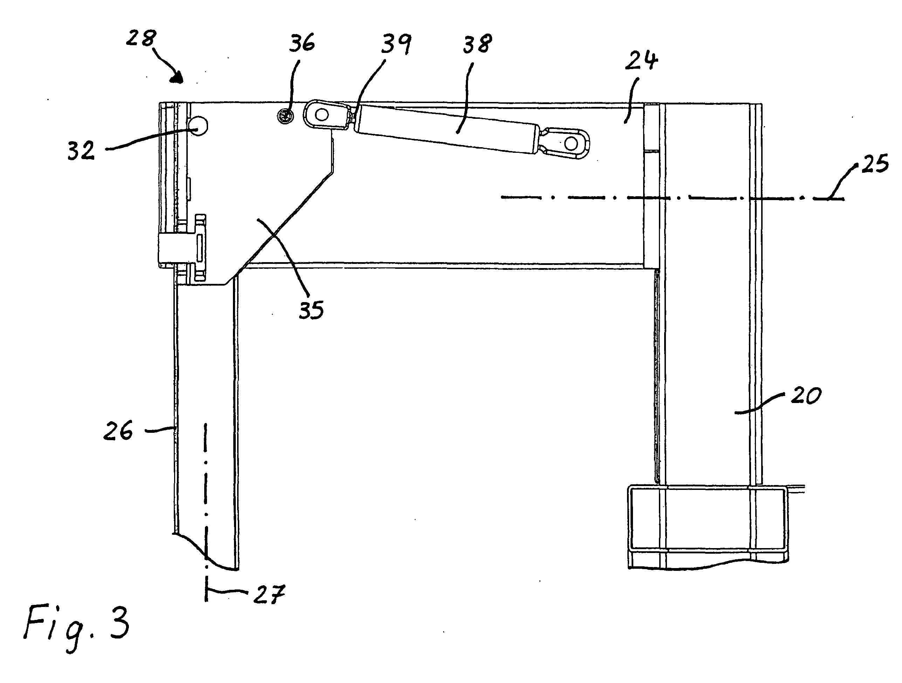

Über die Gelenkvorrichtung 28 des Tragarms 22 kann der zweite Armabschnitt 26 zwischen einer ersten Stellung (Betriebsstellung; durchgezogene Linien in Fig. 1) und einer zweiten Stellung (Nichtbetriebsstellung; strichpunktierte Linien in Fig. 1) bewegt werden. In der ersten Betriebssteilung des zweiten Armabschnitts 26 (siehe Fig. 2) verlaufen die Längsachsen 25, 27 (siehe Fig. 2 und 3) der beiden Armabschnitte 24, 26 im Wesentlichen parallel zueinander und der am zweiten Armabschnitt 26 befestigte Projektor 30 ist in einer vorbestimmten Weise auf die Projektionstafel 18 gerichtet. In der zweiten Nichtbetriebsstellung des zweiten Armabschnitts 26 (siehe Fig. 3) dagegen verläuft die Längsachse 27 des zweiten Armabschnitts 26 im Wesentlichen senkrecht zur Längsachse 25 des ersten Armabschnitts 24, sodass der Projektor 30 nach unten vor die Projektionstafel 18 abgeklappt und somit geschützt ist.

Insbesondere bei mobilen Präsentationsvorrichtungen ist es wichtig, den Projektor 30 bei Nichtgebrauch zu schützen und die Gesamtabmessungen der Vorrichtung für den Transport zu begrenzen. So kann die Präsentationsvorrichtung mit dem abgeklappten und in dieser Nichtbetriebsstellung geschützten Projektor 30 durch Türen mit Standardmaßen gefahren werden und nimmt bei Nichtgebrauch weniger Raum ein.

Damit eine Benutzung der Präsentationsvorrichtung durch Nichtbefugte verhindert werden kann, ist der Tragarm 22 bevorzugt so ausgebildet, dass sein zweiter Armabschnitt 26 in der abgeklappten Nichtbetriebsstellung (Fig. 3) verriegelbar und vorzugsweise auch abschließbar ist.

In diesem Ausführungsbeispiel sind die Präsentationselemente eine interaktive Projektionstafel 18 und ein auf diese gerichteter Projektor 30. Selbstverständlich können im Rahmen der Erfindung auch andere Präsentationselemente bzw. andere Kombinationen von Präsentationselementen an dem Träger 16 der Höhenpositioniervorrichtung befestigt werden. Mögliche andere Präsentationselemente sind zum Beispiel ein Bildschirm, ein Whiteboard, eine Projektionstafel, eine integrierte Einheit aus Projektionstafel und darauf gerichtetem Projektor, ein Projektor und dergleichen.

Während in dem Ausführungsbeispiel von Fig. 1 einer mobilen Präsentationsvorrichtung mit einem verfahrbaren Untergestell vorzugsweise mehrere Aufnahmen, Ablagen oder dergleichen an diesem Untergestell vorgesehen sind, ist dies bei einer alternativen Präsentationsvorrichtung der Erfindung, die an einer Wandschiene, einem ortsfesten Element oder dergleichen montierbar ist, nicht möglich. In diesem Fall ist es von Vorteil, wenn an der Halterung 14 der Höhenpositioniervorrichtung, über welche die Präsentationsvorrichtung zum Beispiel an einer Wandschiene eingehängt werden kann, eine Zusatzeinrichtung zum Beispiel in Form eines schwenkbaren und/oder höhenverstellbaren Arms angebracht ist, der eine Ablage oder eine Befestigungsmöglichkeit zum Beispiel für ein Notebook zum Ansteuern der Präsentationselemente 18, 30 der Präsentationsvorrichtung aufweist. Die elektrischen Anschlüsse und Kommunikationsverbindungen sind entsprechend in der Halterung 14 untergebracht.

Bezug nehmend auf Fig. 2 bis 4 werden nun der Aufbau und die Funktionsweise des Tragarms 22 bzw. seiner Gelenkvorrichtung 28 genauer beschrieben.

Die Gelenkvorrichtung 28 des Tragarms 22 weist ein(e) drehfest an dem zweiten Armabschnitt 26 angebrachte(s) Platte bzw. Gehäuse 35 auf, die um eine am ersten Armabschnitt 24 vorgesehene Drehwelle drehbar bzw. schwenkbar ist, welche die Drehachse 32 der Gelenkvorrichtung 28 bildet. Im montierten Zustand des Tragarms (siehe Fig. 1) verläuft diese Drehachse 32 im Wesentlichen horizontal und im Wesentlichen senkrecht zu den Längsachsen 25, 27 von erstem und zweitem Armabschnitt 24, 26.

An dem ersten Armabschnitt 24 ist an seinem der Gelenkvorrichtung 28 zugewandten Endbereich eine Führungsnut 34 vorgesehen und an der Platte 35 ist ein Führungsnocken 36 angebracht, der in dieser Führungsnut 34 geführt ist. Die Führungsnut 34 bildet im Wesentlichen einen Viertelkreis von etwa 90° um die oben genannte Drehachse 32, sodass die Drehbewegung des zweiten Armabschnitts 26 relativ zum ersten Armabschnitt 24 über maximal etwa 90° erfolgen kann.

Die Führungsnut 34 ist dabei derart an dem ersten Armabschnitt 24 positioniert und ausgerichtet, dass in der ersten (End-)Stellung des zweiten Armabschnitts 26 (Betriebsstellung; Fig. 2) die Längsachsen 25, 27 der beiden Armabschnitte 24, 26 im Wesentlichen parallel zueinander verlaufen; d.h. im montierten Zustand des Tragarms 22 gemäß Fig. 1 beide im Wesentlichen horizontal verlaufen. In der zweiten (End-)Stellung des zweiten Armabschnitts 26 (Nichtbetriebsstellung; Fig. 3) verläuft die Längsachse 27 des zweiten Armabschnitts 26 im Wesentlichen senkrecht zur Längsachse 25 des ersten Armabschnitts 24; d.h. im montierten Zustand des Tragarms 22 gemäß Fig. 1 im Wesentlichen vertikal.

In einer Ausführungsform werden die Grenzen der Drehbewegung des zweiten Armabschnitts 26 relativ zum ersten Armabschnitt 24 und damit die Betriebsstellung und die Nichtbetriebsstellung des zweiten Armabschnitts 26 einfach durch die Enden der Führungsnut 34 bestimmt, an welche der darin geführte Nocken 36 stößt.

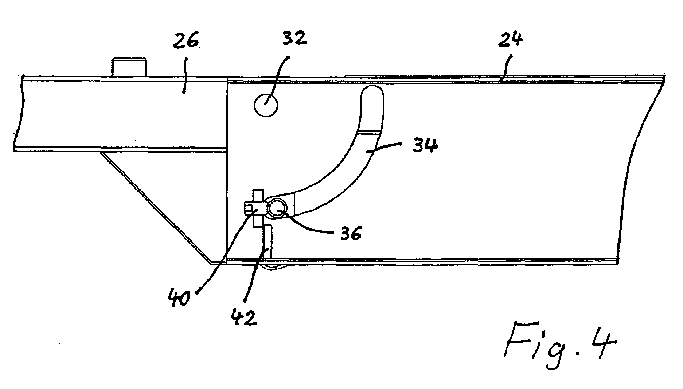

Bei einer bevorzugten Modifikation dieser Ausführunsgform der Erfindung ist der Führungsnocken 36 an der Platte 35 über ein Befestigungselement 40 derart befestigt, dass seine Position relativ zur Führungsnut 34 verändert werden kann. Diese Veränderung der Relativposition kann zum Beispiel mit Hilfe einer Stellschraube 42 durchgeführt werden, die mit einem Gewindeabschnitt des Befestigungselements 40 in Eingriff steht, wie in Fig. 4 veranschaulicht.

Je nach Einstellung der Relativposition zwischen Nocken 36 und Führungsnut 34 kann sich der Führungsnocken 36 weiter oder weniger weit in der Führungsnut 34 bewegen. Mit anderen Worten erreicht der Nocken 36 früher oder später seine möglichen Endpositionen in der Führungsnut 34, durch welche die erste Betriebsstellung und die zweite Nichtbetriebsstellung definiert werden. Auf diese Weise können insbesondere die erste und auch die zweite Stellung des zweiten Armabschnitts 26 relativ zum ersten Armabschnitt 24 bei Erstmontage und im Laufe der Betriebszeit fein justiert bzw. nachjustiert werden.

Der Aufbau der Gelenkvorrichtung 28 ist nicht auf das in Fig. 2 bis 4 dargestellte und oben beschriebene Ausführungsbeispiel beschränkt. Es gibt zahlreiche Abwandlungen und Modifikationen innerhalb des durch die Ansprüche definierten Schutzumfangs. Insbesondere sind ausgehend von dem in Fig. 2 bis 4 veranschaulichten Beispiel verschiedene Umkehrungen denkbar, sodass zum Beispiel auch die Platte 35 drehfest am ersten Armabschnitt 24 befestigt sein kann, die Führungsnut 34 an der Platte 35 oder dem zweiten Armabschnitt 26 ausgebildet sein kann, und/oder der Führungsnocken 36 am ersten Armabschnitt 24 oder am zweiten Armabschnitt 26 vorgesehen sein kann. Außerdem ist es auch denkbar, die Platte 35 einstückig mit dem zweiten Armabschnitt 26 bzw. dem ersten Armabschnitt 24 auszubilden.

Neben dieser Gelenkvorrichtung 28 zwischen den beiden Armabschnitten 24 und 26 des Tragarms 22 ist an dem erfindungsgemäßen Tragarm 22 ferner eine spezielle Federvorrichtung vorgesehen.

In dem Ausführungsbeispiel von Fig. 2 und 3 wird diese Federvorrichtung durch eine Gasfeder 38 gebildet. Ein Ende (rechts in Fig. 1 und 2) dieser Gasfeder 38 ist drehbar an dem ersten Armabschnitt 24 befestigt. Das andere Ende (links in Fig. 1 und 2) der Gasfeder 38 ist drehbar an der Platte 35 befestigt, die drehfest mit dem zweiten Armabschnitt 26 verbunden ist. Die Befestigungsposition dieses anderen Endes der Gasfeder 38 ist dabei außerhalb der Drehachse 32 gewählt, sodass sich die Gasfeder 38 während einer Drehbewegung des zweiten Armabschnitts 26 um die Drehachse 32 relativ zum ersten Armabschnitt 24 ebenfalls etwas dreht und dabei ihre Kolbenstange ein- bzw. ausgefahren wird.

Die Gasfeder 38 zeichnet sich dadurch aus, dass sie über einen großen Hubbereich der Kolbenstange eine relativ konstante Federkraft bereitstellt. Diese Federkraft ist erfindungsgemäß größer als eine Gewichtskraft des zweiten Armabschnitts und der daran befestigten Projektionsvorrichtung 30 gewählt. Dadurch gleicht die Gasfeder 38 diese Gewichtskraft über im Wesentlichen den gesamten Schwenkbereich des zweiten Armabschnitts 26 relativ zum ersten Armabschnitt 24 aus. Auf diese Weise erfolgt die Schwenkbewegung des zweiten Armabschnitts 26 relativ zum ersten Armabschnitt 24 gedämpft. Mit anderen Worten werden beabsichtigte und ungewollte schnelle Bewegungen des zweiten Armabschnitts 26 verhindert, was wiederum die elektronischen Präsentationselemente wie Projektionstafel 18 und Projektor 30 vor Beschädigungen schützt.

Wie in Fig. 2 und 3 zu erkennen, ist die Gasfeder 38 mit ihrem einen Ende (links in den Figuren) an einer solchen Position an der Platte 35 befestigt, dass ihre Kolbenstange 39 sowohl in der ersten als auch in der zweiten Stellung des zweiten Armabschnitts 26 relativ zum ersten Armabschnitt 24 zumindest etwas ausgefahren ist und bei einer Bewegung des zweiten Armabschnitts 26 zwischen den beiden Endstellungen über eine am meisten eingefahrene Position hinweg bewegt wird. So ist die Gasfeder 38 in der ersten Stellung des zweiten Armabschnitts 26 nach links unten geneigt (Fig. 2) und in der zweiten Stellung in Fig. 3 etwas nach links oben geneigt, wobei die Kolbenstange 39 der Gasfeder 38 in der horizontalen Ausrichtung der Gasfeder 38 am meisten eingefahren ist.

Auf diese Weise wird erreicht, dass die Federkraft der Gasfeder 38 in beiden Endstellungen des zweiten Armabschnitts 26 diesen in Richtung weg von der jeweils anderen Stellung drückt. Der zweite Armabschnitt 26 wird also durch die Gasfeder 38 sowohl in seiner ersten Stellung (Fig. 2) als auch in seiner zweiten Stellung (Fig. 3) ohne zusätzliche Maßnahmen gehalten. Die Federkraft der Gasfeder 38 sollte dabei nicht zu groß gewählt werden, damit der zweite Armabschnitt 26 durch einen Benutzer ohne zu großen Kraftaufwand zwischen seinen beiden Endstellungen relativ zum ersten Armabschnitt 24 des Tragarms 22 bewegt werden kann.

Auch bezüglich dieser Federvorrichtung 38 ist die vorliegende Erfindung nicht auf das in Fig. 2 und 3 dargestellte Ausführungsbeispiel beschränkt und es gibt zahlreiche Abwandlungen und Modifikationen innerhalb des durch die Ansprüche definierten Schutzumfangs.

Zum Beispiel kann die Gasfeder 38 alternativ auch an dem ersten Armabschnitt 24 und an dem zweiten Armabschnitt 26 befestigt sein. Falls die Platte 35 drehfest am ersten Armabschnitt 24 angebracht ist, wird die Gasfeder 38 einerseits mit dem zweiten Armabschnitt 26 und andererseits mit der Platte 35 oder dem ersten Armabschnitt 24 verbunden. Auch muss die Kolbenstange der Gasfeder 38 nicht unbedingt in der ersten Stellung des zweiten Armabschnitts 26 ausgefahren sein, wie in Fig. 2 dargestellt, sondern kann bei entsprechender Positionierung des Kolbenstangenendes an der Platte 35 auch eingefahren sein und bei einer Drehbewegung des zweiten Armabschnitts 26 in seine zweite Stellung (Fig. 3) ausfahren.

Ferner können auch zwei oder mehr Gasfedern 38 an dem Tragarm 22 vorgesehen sein, die parallel zueinander an dem Tragarm 22 angebracht sind. Falls der Tragarm 22 in seiner Längsrichtung im Wesentlichen aus einer Komponente besteht, so können zum Beispiel zwei Gasfedern 38 beidseitig dieser einen Komponente angebracht werden (evt. einschließlich einer beidseitigen angebrachten Kombination von Führungsnut 34 und Führungsnocken 36). Ist der Tragarm 22 dagegen in seiner Längsrichtung aus mehreren parallelen Komponenten aufgebaut, so kann zum Beispiel jede dieser mehreren Komponenten mit einer Gasfeder 38 und/oder einer Führungseinrichtung 34, 36 ausgestattet sein. Die Verwendung mehrere Gasfedern oder von Zwillingsfedern erhöht die Betriebssicherheit des Tragarms weiter.

Um ein Verletzungsrisiko für den Benutzer des Tragarms 22 bzw. der Präsentationsvorrichtung zu vermieden bzw. zu minimieren, sind die Gelenkvorrichtung 28 und die Federvorrichtung 38 des Tragarms 22 vorzugsweise mit Abdeckungen (nicht dargestellt) versehen, sodass ein gekapselter Aufbau entsteht.

## Patentansprüche

1. Tragarm (22) für eine Projektionsvorrichtung (30), mit einem ersten Armabschnitt (24), einem zweiten Armabschnitt (26), einer Gelenkvorrichtung (28) zwischen dem ersten und dem zweiten Armabschnitt (24, 26) zum Verbinden der beiden Armabschnitte und einer Federvorrichtung (38), die einerseits mit dem ersten Armabschnitt (24) und andererseits mit dem zweiten Armabschnitt (26) gekoppelt ist,
wobei an einem freien Ende des zweiten Armabschnitts (26) eine Projektionsvorrichtung (30) befestigbar ist,
wobei die Gelenkvorrichtung (28) derart ausgebildet ist, dass der zweite Armabschnitt (26) relativ zum ersten Armabschnitt (24) zwischen einer ersten Stellung und einer zweiten Stellung drehbar ist, und
wobei die Federkraft der Federvorrichtung (38) so gewählt ist, dass sie eine Gewichtskraft des zweiten Armabschnitts (26) und der daran befestigten Projektionsvorrichtung (30) über im Wesentlichen den gesamten Drehweg des zweiten Armabschnitts (26) relativ zum ersten Armabschnitt (24) ausgleicht, **dadurch gekennzeichnet, dass**
der erste Armabschnitt (24) starr an einem Träger (16) befestigbar ist und in seinem an dem Träger (16) befestigten Zustand im Wesentlichen horizontal verläuft;
der zweite Armabschnitt (26), wenn der erste Armabschnitt (24) an dem Träger (16) befestigt ist, in seiner ersten Stellung im Wesentlichen horizontal verläuft, sodass die Längsachsen (25, 27) der beiden Armabschnitte im Wesentlichen parallel zueinander verlaufen und die beiden Armabschnitte (24, 26) im Wesentlichen geradlinig ausgerichtet sind, und in seiner zweiten Stellung im Wesentlichen vertikal nach unten verläuft, sodass die Längsachsen (25, 27) im Wesentlichen rechtwinklig zueinander verlaufen.

2. Tragarm nach Anspruch 1,
**dadurch gekennzeichnet,**
**dass** die Federvorrichtung (38) mit dem ersten und dem zweiten Armabschnitt (24, 26) des Tragarms (22) so gekoppelt und deren Federkraft so gewählt ist, dass der zweite Armabschnitt (26) durch die Federvorrichtung (38) in seiner ersten Stellung und/oder seiner zweiten Stellung gehalten wird.

3. Tragarm nach Anspruch 1 oder 2,
**dadurch gekennzeichnet,**
**dass** die Federvorrichtung (38) wenigstens eine Gasfeder enthält.

4. Tragarm nach Anspruch 3,
**dadurch gekennzeichnet,**
**dass** ein Ende der Gasfeder (38) am ersten Armabschnitt (24) des Tragarms (22) oder einem starr mit diesem verbundenen Element drehbar befestigt ist und ein anderes Ende der Gasfeder (38) am zweiten Armabschnitt (26) des Tragarms (22) oder einem starr mit diesem verbundenen Element (35) drehbar befestigt ist.

5. Tragarm nach einem der vorherigen Ansprüche,
**dadurch gekennzeichnet,**
**dass** die Gelenkvorrichtung (28) eine Führungseinrichtung (34, 36) aufweist, die die Drehbewegung des zweiten Armabschnitts (26) relativ zum ersten Armabschnitt (24) führt und bezüglich der ersten und/oder der zweiten Stellung des zweiten Armabschnitts (26) relativ zum ersten Armabschnitt (24) begrenzt.

6. Tragarm nach Anspruch 5,
**dadurch gekennzeichnet,**
**dass** die Führungseinrichtung (34, 36) eine Führungsnut (34) und einen in der Führungsnut geführten Nocken (36) aufweist, wobei ein Ende der Führungsnut (34) die erste bzw. zweite Stellung des zweiten Armabschnitts (26) relativ zum ersten Armabschnitt (24) bestimmt.

7. Tragarm nach Anspruch 5 oder 6,
**dadurch gekennzeichnet,**
**dass** die Führungseinrichtung (34, 36) eine Führungsnut (34) und einen in der Führungsnut geführten Nocken (36) aufweist, wobei eine Relativposition des Nockens (36) zur Führungsnut (34) die erste bzw. zweite Stellung des zweiten Armabschnitts (26) relativ zum ersten Armabschnitt (24) bestimmt.

8. Tragarm nach Anspruch 7,
**dadurch gekennzeichnet,**
**dass** die Relativposition des Nockens (36) zur Führungsnut (34) einstellbar ist.

9. Tragarm nach einem der Ansprüche 6 bis 8,
**dadurch gekennzeichnet,**
**dass** die Führungsnut (34) am ersten Armabschnitt (24) des Tragarms (22) oder einem starr mit diesem verbundenen Element vorgesehen ist und der Führungsnocken (36) am zweiten Armabschnitt (26) des Tragarms (22) oder einem starr mit diesem verbundenen Element (35) vorgesehen ist.

10. Tragarm nach einem der Ansprüche 6 bis 8,
**dadurch gekennzeichnet,**
**dass** die Führungsnut (34) am zweiten Armabschnitt (26) des Tragarms (22) oder einem starr mit diesem verbundenen Element (35) vorgesehen ist und der Führungsnocken (36) am ersten Armabschnitt (24) des Tragarms (22) oder einem starr mit diesem verbundenen Element vorgesehen ist.

11. Tragarm nach einem der vorherigen Ansprüche,
**dadurch gekennzeichnet,**
**dass** der zweite Armabschnitt (26) des Tragarms (22) in seiner zweiten Stellung verriegelbar, vorzugsweise abschließbar ist.

12. Präsentationsvorrichtung, mit einem Träger (16); einer Projektionstafel (18), die an dem Träger (16) befestigt ist; und einer Projektionsvorrichtung (30), die über einen Tragarm (22) an dem Träger (16) befestigt ist, wobei der Tragarm (22) nach einem der Ansprüche 1 bis 11 ausgebildet ist und so an dem Träger (16) befestigt ist, dass der zweite Armabschnitt (26) des Tragarms (22) in seiner ersten Stellung die Projektionsvorrichtung (30) in einer vorbestimmten Betriebsposition relativ zur Projektionstafel (18) positioniert und in seiner zweiten Stellung vor die Projektionstafel (18) abgeklappt ist.

13. Präsentationsvorrichtung nach Anspruch 12,
**dadurch gekennzeichnet,**
**dass** der Träger (16) höhenverstellbar ausgebildet oder montiert ist.

14. Präsentationsvorrichtung nach Anspruch 12 oder 13,
**dadurch gekennzeichnet,**
**dass** die Präsentationsvorrichtung mobil ausgebildet ist oder fest installiert ist.

## Claims

1. A supporting arm (22) for a projection apparatus (30), comprising: a first arm portion (24), a second arm portion (26), an articulation means (28) disposed between said first and second arm portions (24, 26) for interconnecting both said arm portions, and a spring means (38) being coupled to said first arm portion (24) on the one hand and to said second arm portion (26) on the other hand,
wherein a projection apparatus (30) can be fastened to a free end of said second arm portion (26),
wherein said articulation means (28) is configured such that said second arm portion (26) is rotatable relative to said first arm portion (24) between a first position and a second position, and
wherein a spring force of said spring means (38) is selected such that it compensates for a weight force of said second arm portion (26) and of the projection apparatus (30) fastened thereon over substantially all of said rotational excursion of said second arm portion (26) relative to said first arm portion (24),
**characterized in that**
said first arm portion (24) can be rigidly mounted on a support (16) and runs substantially horizontally in its condition being mounted on said support (16); said second arm portion (26) runs substantially horizontally in said first position such that the longitudinal axes (25, 27) of both said arm portions run substantially parallel to one another and both said arm portions (24, 26) are oriented substantially collinearly, and runs substantially vertically downward in said second position such that the longitudinal axes (25, 27) run substantially at right angles to one another, when said first arm portion (24) is mounted on said support (16).

2. The supporting arm according to claim 1,
**characterized in that**
said spring means (38) is coupled to said first and second arm portions (24, 26) of said supporting arm (22) and its spring force is selected such that said spring means (38) holds said second arm portion (26) in its first position and/or its second position.

3. The supporting arm according to claim 1 or 2,
**characterized in that**
said spring means (38) includes at least one gas spring.

4. The supporting arm according to claim 3,
**characterized in that**
said at least one gas spring (38) has one end fastened rotatably on said first arm portion (24) of said supporting arm (22) or on an element rigidly connected thereto and another end fastened rotatably on said second arm portion (26) of said supporting arm (22) or on an element (35) rigidly connected thereto.

5. The supporting arm according to anyone of preceding claims,
**characterized in that**
said articulation means (28) has a guiding means (34, 36) guiding a rotational movement of said second arm portion (26) relative to said first arm portion (24) and delimiting said rotational movement relative to said first and/or second positions of said second arm portion (26) relative to said first arm portion (24).

6. The supporting arm according to claim 5,
**characterized in that**
said guiding means (34, 36) has a guiding groove (34) and a cam (36) guided in said guiding groove, wherein one end of said guiding groove (34) determines said first or second position of said second arm portion (26) relative to said first arm portion (24).

7. The supporting arm according to claim 5 or 6,
**characterized in that**
said guiding means (34, 36) has a guiding groove (34) and a cam (36) guided in said guiding groove, wherein a relative position of said cam (36) to said guiding groove (34) determines said first or second position of said second arm portion (26) relative to said first arm portion (24).

8. The supporting arm according to claim 7,
**characterized in that**
said relative position of said cam (36) to said guiding groove (34) is adjustable.

9. The supporting arm according to anyone of claims 6 to 8,
**characterized in that**
said guiding groove (34) is provided at said first arm portion (24) of said supporting arm (22) or an element rigidly connected thereto, and said guiding cam (36) is provided on said second arm portion (26) of said supporting arm (22) or on an element (35) rigidly connected thereto.

10. The supporting arm according to anyone of claims 6 to 8,
**characterized in that**
said guiding groove (34) is provided at said second arm portion (26) of said supporting arm (22) or an element (35) rigidly connected thereto, and said guiding cam (36) is provided on said first arm portion (24) of said supporting arm (22) or on an element rigidly connected thereto.

11. The supporting arm according to anyone of preceding claims
**characterized in that**
said second arm portion (26) of said supporting arm (22) is configured to be latched, preferably locked in its second position.

12. A presentation apparatus, comprising: a support (16); a projection panel (18) fastened on said support (16); and a projection apparatus (30) fastened on said support (16) via a supporting arm (22), wherein said supporting arm (22) is configured according to anyone of claims 1 to 11 and is fastened to said support (16) such that said second arm portion (26) of said supporting arm (22) positions said projection apparatus (30) in a predetermined operating position relative to said projection panel (18) in said first position and is folded down in front of said projection panel (18) in said second position.

13. The presentation apparatus according to claim 12,
**characterized in that**
said support (16) is constructed or mounted to be vertically adjustable.

14. The presentation apparatus according to claim 12 or 13,
**characterized in that**
the presentation apparatus is configured to be mobile or is installed fixedly.

## Revendications

1. Bras de support (22) pour un dispositif de projection (30), doté d'une première partie de bras (24), d'une seconde partie de bras (26), d'un dispositif articulé (28) entre la première et la seconde partie de bras (24, 26) destiné à relier les deux parties de bras et d'un dispositif à ressort (38) accouplé d'une part à la première partie de bras (24) et d'autre part à la seconde partie de bras (26),
un dispositif de projection (30) pouvant être fixé à une extrémité libre de la seconde partie de bras (26),
le dispositif articulé (28) étant conçu de telle sorte que la seconde partie de bras (26) puisse tourner par rapport à la première partie de bras (24) entre une première position et une seconde position, et
la force élastique du dispositif à ressort (38) étant sélectionnée de sorte qu'elle compense un poids de la seconde partie de bras (26) et du dispositif de projection (30) fixé dessus sur sensiblement tout le trajet de rotation de la seconde partie de bras (26) par rapport à la première partie de bras (24), **caractérisé en ce que** la première partie de bras (24) peut être fixée rigidement sur un support (16) et s'étend sensiblement horizontalement dans son état fixé sur le support (16) ;
la seconde partie de bras (26), lorsque la première partie de bras (24) est fixée sur le support (16), s'étend sensiblement horizontalement dans sa première position, de sorte que les axes longitudinaux (25, 27) des deux parties de bras s'étendent sensiblement parallèlement l'une à l'autre et que les deux parties de bras (24, 26) soient orientées de manière sensiblement rectiligne, et s'étend sensiblement verticalement vers le bas dans sa seconde position, de sorte que les axes longitudinaux (25, 27) s'étendent sensiblement à angle droit.

2. Bras de support selon la revendication 1,
**caractérisé en ce que** le dispositif à ressort (38) est accouplé à la première et à la seconde partie de bras (24, 26) du bras de support (22) et sa force élastique est sélectionnée de sorte que la seconde partie de bras (26) soit retenue par le dispositif à ressort (38) dans sa première position et/ou dans sa seconde position.

3. Bras de support selon la revendication 1 ou 2,
**caractérisé en ce que** le dispositif à ressort (38) comprend au moins un ressort à gaz.

4. Bras de support selon la revendication 3,
**caractérisé en ce qu'**une extrémité du ressort à gaz (38) est fixée rotative sur la première partie de bras (24) du bras de support (22) ou sur un élément relié rigidement à celle-ci et une autre extrémité du ressort à gaz (38) est fixée rotative sur la seconde partie de bras (26) du bras de support (22) ou sur un élément (35) relié rigidement à celle-ci.

5. Bras de support selon l'une quelconque des revendications précédentes,
**caractérisé en ce que** le dispositif articulé (28) comprend un dispositif de guidage (34, 36) guidant le déplacement rotatif de la seconde partie de bras (26) par rapport à la première partie de bras (24) et en ce qui concerne la première et/ou la seconde position de la seconde partie de bras (26), le limitant par rapport à la première partie de bras (24).

6. Bras de support selon la revendication 5,
**caractérisé en ce que** le dispositif de guidage (34, 36) comprend une rainure de guidage (34) et une came (36) guidée dans la rainure de guidage, une extrémité de la rainure de guidage (34) définissant la première ou la seconde position de la seconde partie de bras (26) par rapport à la première partie de bras (24).

7. Bras de support selon la revendication 5 ou 6,
**caractérisé en ce que** le dispositif de guidage (34, 36) comprend une rainure de guidage (34) et une came (36) guidée dans la rainure de guidage, une position relative de la came (36) par rapport à la rainure de guidage (34) définissant la première ou la seconde position de la seconde partie de bras (26) par rapport à la première partie de bras (24).

8. Bras de support selon la revendication 7,
**caractérisé en ce que** la position relative de la came (36) par rapport à la rainure de guidage (34) peut être réglée.

9. Bras de support selon l'une quelconque des revendications 6 à 8,
**caractérisé en ce que** la rainure de guidage (34) est présente sur la première partie de bras (24) du bras de support (22) ou sur un élément rigide relié à celle-ci et la came de guidage (36) est disposée sur la seconde partie de bras (26) du bras de support (22) ou sur un élément (35) relié rigidement à celle-ci.

10. Bras de support selon l'une quelconque des revendications 6 à 8,
**caractérisé en ce que** la rainure de guidage (34) est présente sur la seconde partie de bras (26) du bras de support (22) ou sur un élément (35) relié rigidement à celle-ci et la came de guidage (36) est disposée sur la première partie de bras (24) du bras de support (22) ou sur un élément relié à celle-ci.

11. Bras de support selon l'une quelconque des revendications précédentes,
**caractérisé en ce que** la seconde partie de bras (26) du bras de support (22) peut être verrouillée, de préférence fermée à clé, dans sa seconde position.

12. Dispositif de présentation, comprenant un support (16), un panneau de projection (18) fixé au support (16) et un dispositif de projection (30) fixé au support (16) par un bras de support (22), le bras de support (22) étant conçu selon l'une des revendications 1 à 11 et étant fixé au support (16) de sorte que la seconde partie de bras (26) du bras de support (22) dans sa première position positionne le dispositif de projection (30) dans une position de fonctionnement prédéfinie par rapport au panneau de projection (18) et soit rabattue dans sa seconde position devant le panneau de projection (18).

13. Dispositif de présentation selon la revendication 12,
**caractérisé en ce que** le support (16) est conçu ou monté réglable en hauteur.

14. Dispositif de présentation selon la revendication 12 ou 13,
**caractérisé en ce que** le dispositif de présentation est mobile ou installé à demeure.
